# EUROPÄISCHE PATENTSCHRIFT

(11) **EP 3 227 166 B1**
(45) Veröffentlichungstag und Bekanntmachung des Hinweises auf die Patenterteilung: **15.05.2019**
(21) Anmeldenummer: 15781603.4
(22) Anmeldetag: 06.10.2015
(51) Int. Cl.: B62D 6/10

(54) **SERVOLENKUNG FÜR FAHRZEUGE**
POWER STEERING SYSTEM FOR VEHICLES
DIRECTION ASSISTÉE POUR VÉHICULES

(30) Priorität: 03.12.2014 DE 102014117802
(43) Veröffentlichungstag der Anmeldung: 11.10.2017
(73) Patentinhaber: TRW Automotive GmbH, 73553 Alfdorf (DE)
(72) Erfinder: KAPPELHOFF, Tim, 40549 Duesseldorf (DE)
(74) Vertreter: Prinz & Partner mbB
(86) Internationale Anmeldenummer: PCT/EP2015/073000
(87) Internationale Veröffentlichungsnummer: WO 2016/087089

(56) Entgegenhaltungen:
- EP-A1- 1 867 553
- EP-A2- 0 174 203
- EP-A2- 1 197 725
- WO-A1-2015/133168

## Beschreibung

Die Erfindung betrifft eine Servolenkung für Fahrzeuge, mit einer Eingangswelle, die um eine Lenkachse drehbar ist, einem um die Eingangswelle angeordneten Mantelrohr, einem Sensorgehäuse, welches axial an das Mantelrohr angrenzt und eine Gehäuseöffnung für die Eingangswelle aufweist, sowie einem Wellenaufweitungselement, das mit der Eingangswelle verbunden ist und einen Außendurchmesser aufweist, wobei sich die Eingangswelle durch das Mantelrohr und die Gehäuseöffnung ins Innere des Sensorgehäuses erstreckt.

Derartige Servolenkungen sind bereits aus dem Stand der Technik bekannt und stellen bei Bedarf ein Hilfslenkmoment bereit, das den Fahrer beim Lenken eines Kraftfahrzeugs unterstützt. Die Eingangswelle ist dabei in der Regel über einen Torsionsstab mit einer Ausgangswelle der Servolenkung verbunden, welche wiederum über ein Lenkgetriebe mit lenkbaren Rädern des Kraftfahrzeugs gekoppelt ist.

Da bei einem Bruch des Torsionsstabs oder einer Torsionsstabbefestigung weiterhin eine zuverlässige Lenkung des Fahrzeugs über das Lenkrad gewährleistet sein muss, wurden bereits konstruktive Sicherungsmaßnahmen vorgeschlagen, welche in diesen Fällen eine mechanische Verbindung zwischen der Eingangswelle und der Ausgangswelle sicherstellen.

Beispielsweise sind Ausführungsvarianten bekannt, bei denen ein Sicherungsring in eine an der Eingangswelle ausgebildete Nut eingeklipst und ferner ein ringförmiges Anschlagelement im Mantelrohr der Servolenkung befestigt ist, wobei der Innendurchmesser des Anschlagelements kleiner ist als der Außendurchmesser des Sicherungsrings. Auf diese Weise wird zuverlässig verhindert, dass sich das Lenkrad mitsamt der daran befestigten Eingangswelle axial aus dem Mantelrohr herausziehen lässt und damit die mechanische Verbindung zwischen dem Lenkrad und den lenkbaren Rädern des Kraftfahrzeugs verlorengeht.

Da sowohl der Sicherungsring als auch das Anschlagelement als separate Sicherungskomponenten gefertigt und zuverlässig an der Eingangswelle bzw. am Mantelrohr befestigt werden müssen, ist diese Maßnahme zur axialen Positionssicherung der Eingangswelle fertigungs- und montagetechnisch aufwendig. Die EP1867553 A1 zeigt den Oberbegriff der unabhängigen Ansprüche.

Aufgabe der Erfindung ist daher, eine Servolenkung für Fahrzeuge zu schaffen, welche eine konstruktiv einfache sowie fertigungs- und montagetechnisch vorteilhafte axiale Positionssicherung für die Eingangswelle aufweist.

Diese Aufgabe wird gelöst durch eine Servolenkung der eingangs genannten Art, bei der ein Öffnungsdurchmesser der Gehäuseöffnung kleiner ist als der Außendurchmesser des Wellenaufweitungselements. In dem sowieso vorhandenen Sensorgehäuse für einen Drehwinkelsensor und/oder einen Drehmomentsensor ist die Gehäuseöffnung folglich so passgenau auf die Eingangswelle abgestimmt, dass ein Rand der Gehäuseöffnung beim Bruch des Torsionsstabs oder der Torsionsstabbefestigung einen axialen Anschlag bildet und eine axiale Bewegung der Eingangswelle relativ zum Mantelrohr mit geringem Aufwand zuverlässig verhindert. Das Wellenaufweitungselement ist durch einen Sensor, insbesondere einen Drehmomentsensor und/oder Drehwinkelsensor gebildet, der die Eingangswelle umschließt, an dieser befestigt ist und eine Kontaktfläche aufweist, welche bei einer Bewegung der Eingangswelle in einer axialen Richtung am Rand der Gehäuseöffnung anschlägt.

Dadurch wird mit besonders geringem Aufwand sichergestellt, dass das Lenkrad auch beim Bruch des Torsionsstabs oder der Torsionsstabbefestigung mechanisch mit den lenkbaren Rädern des Kraftfahrzeugs verbunden bleibt.

Die Kontaktfläche kann dabei zusätzlich durch eine Wellenschulter gebildet sein, an der sich ein Durchmesser der Eingangswelle von einem ersten Wellendurchmesser, der dem Außendurchmesser des Wellenaufweitungselements entspricht, auf einen gegenüber dem ersten Wellendurchmesser kleineren, zweiten Wellendurchmesser ändert.

Vorzugsweise ist die Wellenschulter im Inneren des Sensorgehäuses angeordnet, wobei die Eingangswelle im Mantelrohr den ersten Wellendurchmesser und im Sensorgehäuse den zweiten Wellendurchmesser aufweist.

Die Aufgabe wird des Weiteren gelöst durch eine Servolenkung der eingangs genannten Art, bei der ein Öffnungsdurchmesser der Gehäuseöffnung kleiner ist als der Außendurchmesser des Wellenaufweitungselements. Das Wellenaufweitungselement ist dabei durch einen separaten Sicherungsring gebildet, der in einer Nut der Eingangswelle axial unverschieblich aufgenommen ist, wobei der Sicherungsring radial über den Außenumfang der Eingangswelle hinausragt und eine Kontaktfläche aufweist, die bei einer Bewegung der Eingangswelle in einer axialen Richtung am Rand der Gehäuseöffnung anschlägt.

Vorteilhafte und zweckmäßige Ausgestaltungen des Erfindungsgedankens sind in den Unteransprüchen beschrieben.

Weitere Einzelheiten werden nachfolgend anhand einer bevorzugten Ausführungsform beschrieben, die in den beigefügten Zeichnungen dargestellt ist. In diesen zeigt:
- Figur 1 einen Ausschnitt einer bekannten Fahrzeug-Servolenkung gemäß dem Stand der Technik;
- Figur 2 einen Schnitt durch eine erfindungsgemäße Servolenkung für Fahrzeuge; und
- Figur 3 ein Detail III der Servolenkung gemäß Figur 2.

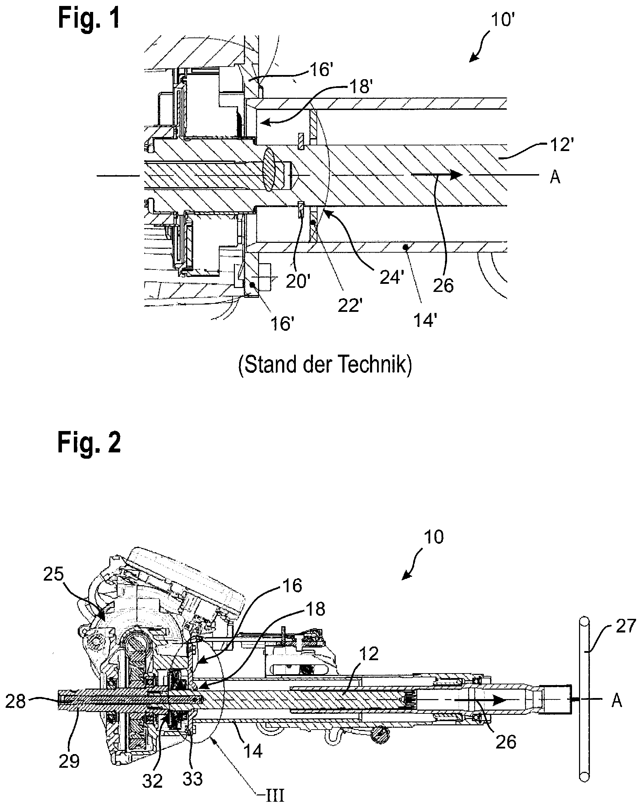

Die Figur 1 zeigt eine bekannte Servolenkung 10' für Fahrzeuge, mit einer Eingangswelle 12', die um eine Lenkachse A drehbar ist, einem koaxial zur Eingangswelle 12' angeordneten Mantelrohr 14', einem Sensorgehäuse 16', welches axial an das Mantelrohr 14' angrenzt und eine Gehäuseöffnung 18' für die Eingangswelle 12' aufweist, sowie einem Sicherungsring 20', der mit der Eingangswelle 12' axial fest verbunden ist. Ferner ist im Mantelrohr 14' ein ringförmiges Anschlagelement 22' befestigt, welches eine Aussparung 24' für die Eingangswelle 12' aufweist.

Ein Durchmesser der kreisförmigen Aussparung 24' ist dabei kleiner als ein Außendurchmesser des Sicherungsrings 20', so dass das Anschlagelement 22' eine Bewegung der Eingangswelle 12' relativ zum Mantelrohr 14' in Eingangswellen-Auszugsrichtung 26 verhindert.

Aufgrund des separaten Sicherungsrings 20' und des separaten Anschlagelements 22' sowie deren Befestigung an der Eingangswelle 12' bzw. dem Mantelrohr 14' ist diese axiale Auszugssicherung für die Eingangswelle 12' sowohl konstruktiv als auch fertigungs- und montagetechnisch aufwendig.

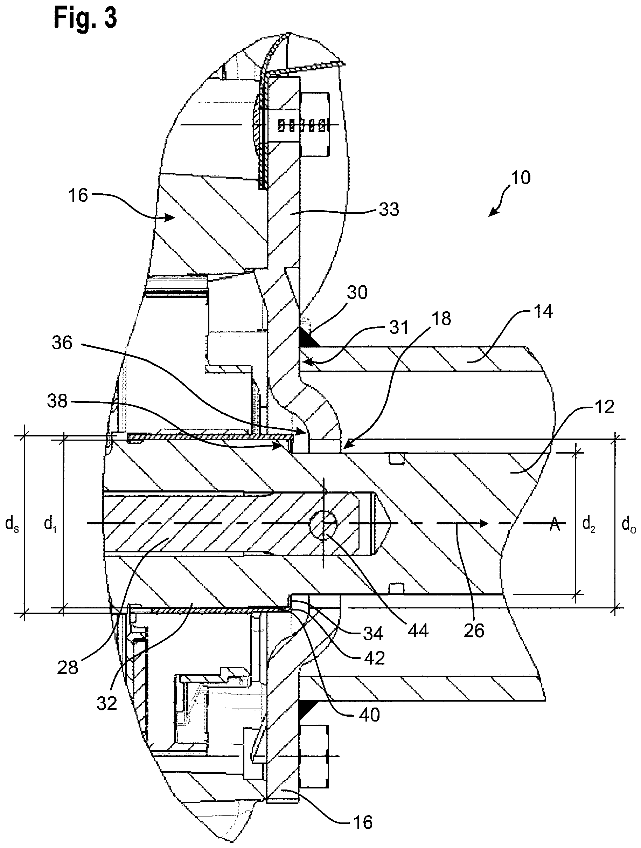

Die Figuren 2 und 3 zeigen einen Schnitt bzw. ein Schnittdetail einer erfindungsgemäßen Servolenkung 10 für Fahrzeuge, wobei in den Figuren 1 bis 3 für einander entsprechende Bauteile jeweils identische Bezugszahlen vergeben wurden und aus dem Stand der Technik bekannte Bauteile lediglich mit einem zusätzlichen Apostroph versehen sind.

Im vorliegenden Ausführungsbeispiel handelt es sich bei der Servolenkung 10 um eine elektromechanische Servolenkung, die eine Lenkhilfskraft mittels eines Elektromotors 25 bereitstellt. In der Regel umfasst eine solche elektromechanische Servolenkung einen Drehwinkelsensor und/oder Drehmomentsensor, wobei derartige Sensoren in einem entsprechenden Sensorgehäuse 16 untergebracht sind.

Die Servolenkung 10 umfasst gemäß Figur 2 eine Eingangswelle 12, die mit einem schematisch dargestellten Lenkrad 27 drehfest verbunden und um eine Lenkachse A drehbar ist, ein koaxial zur Eingangswelle 12 angeordnetes Mantelrohr 14 sowie ein Sensorgehäuse 16 für den Drehwinkelsensor und/oder Drehmomentsensor, welches axial an das Mantelrohr 14 angrenzt und eine Gehäuseöffnung 18 für die Eingangswelle 12 aufweist. Die Eingangswelle 12 ist in der Ausführungsform gemäß Figur 2 über einen Torsionsstab 28 mit einer Ausgangswelle 29 der Servolenkung 10 verbunden, welche in herkömmlicher Weise über ein (nicht dargestelltes) Lenkgetriebe mit lenkbaren Rädern des Kraftfahrzeugs gekoppelt ist.

Die Figur 3 zeigt ein Detail III der Servolenkung 10 gemäß Figur 2 im Bereich der Gehäuseöffnung 18 des Sensorgehäuses 16. Dabei ist durch eine Schweißnaht 30 schematisch angedeutet, dass ein axiales Rohrende 31 des Mantelrohrs 14 fest mit einem Gehäuseflansch 33 des Sensorgehäuses 16 verbunden, insbesondere verschweißt ist.

Die Servolenkung 10 umfasst ferner ein Wellenaufweitungselement 32, das mit der Eingangswelle 12 zumindest in axialer Richtung fest verbunden ist und einen Außendurchmesser d₁ aufweist, wobei sich die Eingangswelle 12 durch das Mantelrohr 14 sowie die Gehäuseöffnung 18 ins Innere des Sensorgehäuses 16 erstreckt und wobei ein Öffnungsdurchmesser d_{O} der Gehäuseöffnung 18 kleiner ist als der Außendurchmesser d₁ des Wellenaufweitungselements 32.

Unter dem Öffnungsdurchmesser d_{O} ist bei kreisförmigen Gehäuseöffnungen 18 der entsprechende Kreisdurchmesser und bei nicht-kreisförmigen Gehäuseöffnungen 18 ein Durchmesser des größten in die Gehäuseöffnung 18 einbeschreibbaren Kreises zu verstehen.

Ferner ist unter dem Außendurchmesser d₁ bei kreisförmigem Außenquerschnitt des Wellenaufweitungselements 32 der Kreisdurchmesser und bei nichtkreisförmigem Außenquerschnitt der minimale Außendurchmesser des Wellenaufweitungselements 32 zu verstehen.

Gemäß Figur 2 ist das Wellenaufweitungselement 32 einstückig mit der Eingangswelle 12 ausgebildet und weist eine axiale Kontaktfläche 34 auf, die bei einer Bewegung der Eingangswelle 12 in Eingangswellen-Auszugsrichtung 26 an einem Rand 36 der Gehäuseöffnung 18 anschlägt.

Die Kontaktfläche 34 wird dabei zumindest teilweise durch eine ringförmig umlaufende Wellenschulter 38 gebildet, an der sich ein Außendurchmesser der Eingangswelle 12 von einem ersten Wellendurchmesser, der dem Außendurchmesser d₁ des Wellenaufweitungselements 32 entspricht, auf einen gegenüber dem ersten Wellendurchmesser d₁ kleineren, zweiten Wellendurchmesser d₂ ändert.

Die Wellenschulter 38 ist gemäß Figur 2 im Inneren des Sensorgehäuses 16 angeordnet, wobei die Eingangswelle 12 im Sensorgehäuse 16 den ersten Wellendurchmesser d₁ und im Mantelrohr 14 den zweiten Wellendurchmesser d₂ aufweist.

Die Gehäuseöffnung 18 ist insbesondere eine kreisrunde Öffnung, wobei gilt: d₁ > d_{O} > d₂. Um eine zuverlässige axiale Auszugssicherung der Eingangswelle 12 zu gewährleisten, ist der Öffnungsdurchmesser d_{O} um wenigstens 1mm kleiner als der erste Wellendurchmesser d₁.

Gemäß Figur 3 ist ein Sensor 40 vorgesehen, insbesondere ein Drehwinkelsensor und/oder ein Drehmomentsensor, der die Eingangswelle 12 umschließt, an dieser befestigt ist und eine axiale Kontaktfläche 42 aufweist, die bei einer Bewegung der Eingangswelle 12 in einer axialen Richtung, insbesondere in Eingangswellen-Auszugsrichtung 26, am Rand 36 der Gehäuseöffnung 18 anschlägt.

Folglich ist das Wellenaufweitungselement 32 alternativ oder zusätzlich zur Wellenschulter 38 durch diesen Sensor 40 gebildet.

Im dargestellten Ausführungsbeispiel weist die Eingangswelle 12 die Wellenschulter 38 auf, an der sich der Durchmesser der Eingangswelle 12 vom ersten Wellendurchmesser d₁ auf den gegenüber dem ersten Wellendurchmesser d₁ kleineren, zweiten Wellendurchmesser d₂ verringert, wobei der Sensor 40 im Bereich des ersten Wellendurchmessers d₁ an der Eingangswelle 12 befestigt ist und axial an die Wellenschulter 38 angrenzt. Ein Sensor-Außendurchmesser d_{S} ist somit größer als der erste Wellendurchmesser d₁. Der Öffnungsdurchmesser d_{O} der Gehäuseöffnung 18 ist dann um wenigstens 1mm kleiner als der Sensor-Außendurchmesser d_{S}, bevorzugt auch um wenigstens 1mm kleiner als der erste Wellendurchmesser d₁.

Alternativ oder zusätzlich ist auch denkbar, dass das Wellenaufweitungselement 32 durch einen separaten Sicherungsring gebildet wird, der im Inneren des Sensorgehäuses 16 angeordnet ist. Dieser Sicherungsring ist (analog zum Sicherungsring 20' gemäß Figur 1) beispielsweise ein Sprengring oder ein E-Ring, der in einer Nut der Eingangswelle 12 axial unverschieblich aufgenommen ist. Der Sicherungsring ragt dabei radial über den Außenumfang der Eingangswelle 12 hinaus und weist eine C-förmige oder ringförmige Kontaktfläche auf, die bei einer Bewegung der Eingangswelle 12 in einer axialen Richtung, insbesondere in Eingangswellen-Auszugsrichtung 26, am Rand 36 der Gehäuseöffnung 18 anschlägt.

Auch in diesem Fall ist der Öffnungsdurchmesser d_{O} der Gehäuseöffnung 18 um wenigstens 1mm kleiner als der Außendurchmesser d₁ des durch den separaten Sicherungsring gebildeten Wellenaufweitungselements 32.

Durch das vorzugsweise einstückig mit der Eingangswelle 12 ausgebildete Wellenaufweitungselement 32 und den passgenauen Öffnungsdurchmesser d_{O} der Gehäuseöffnung 18 im sowieso vorhandenen Sensorgehäuses 16 für den Drehwinkelsensor und/oder Drehmomentsensor, ergibt sich mit geringem konstruktiven sowie fertigungs- und montagetechnischen Aufwand eine einfache Eingangswellen-Auszugssicherung, welche eine Bewegung der Eingangswelle 12 relativ zum Mantelrohr 14 in Eingangswellen-Auszugsrichtung 26 zuverlässig verhindert. Somit ist auch beim Bruch des Torsionsstabs 28 oder einer Torsionsstabbefestigung 44 eine mechanische Verbindung zwischen dem Lenkrad 28 und den lenkbaren Rädern des Kraftfahrzeuges gewährleistet.

## Patentansprüche

1. Servolenkung für Fahrzeuge, mit
einer Eingangswelle (12), die um eine Lenkachse (A) drehbar ist,
einem um die Eingangswelle (12) angeordneten Mantelrohr (14),
einem Sensorgehäuse (16), welches axial an das Mantelrohr (14) angrenzt und eine Gehäuseöffnung (18) für die Eingangswelle (12) aufweist, sowie
einem Wellenaufweitungselement (32), das mit der Eingangswelle (12) verbunden ist und einen Außendurchmesser (d₁) aufweist,
wobei sich die Eingangswelle (12) durch das Mantelrohr (14) und die Gehäuseöffnung (18) ins Innere des Sensorgehäuses (16) erstreckt,
wobei ein Öffnungsdurchmesser (d_{O}) der Gehäuseöffnung (18) kleiner ist als der Außendurchmesser (d₁) des Wellenaufweitungselements (32),
**dadurch gekennzeichnet, dass** das Wellenaufweitungselement (32) durch einen Sensor (40) gebildet ist, der die Eingangswelle (12) umschließt, an der Eingangswelle (12) befestigt ist und eine Kontaktfläche (34, 42) aufweist, die bei einer Bewegung der Eingangswelle (12) in einer axialen Richtung am Rand der Gehäuseöffnung (18) anschlägt.

2. Servolenkung nach Anspruch 1, **dadurch gekennzeichnet, dass** das Mantelrohr (14) ein axiales Rohrende (31) aufweist, welches mit dem Sensorgehäuse (16) fest verbunden ist.

3. Servolenkung nach einem der vorhergehenden Ansprüche, **dadurch gekennzeichnet, dass** die Kontaktfläche (34) durch eine Wellenschulter (38) gebildet ist, an der sich ein Durchmesser der Eingangswelle (12) von einem ersten Wellendurchmesser (d₁), der dem Außendurchmesser (d₁) des Wellenaufweitungselements (32) entspricht, auf einen gegenüber dem ersten Wellendurchmesser (d₁) kleineren, zweiten Wellendurchmesser (d₂) ändert.

4. Servolenkung nach Anspruch 3, **dadurch gekennzeichnet, dass** die Wellenschulter (38) im Inneren des Sensorgehäuses (16) angeordnet ist, wobei die Eingangswelle (12) im Sensorgehäuse (16) den ersten Wellendurchmesser (d₁) und im Mantelrohr (14) den zweiten Wellendurchmesser (d₂) aufweist.

5. Servolenkung nach Anspruch 3 oder 4, **dadurch gekennzeichnet, dass** die Gehäuseöffnung (18) eine kreisrunde Öffnung ist, wobei für den Öffnungsdurchmesser (d_{O}) gilt: d₁ > d_{O} > d₂.

6. Servolenkung nach einem der Ansprüche 3 bis 5, **dadurch gekennzeichnet, dass** der Öffnungsdurchmesser (d_{O}) um wenigstens 1 mm kleiner ist als der erste Wellendurchmesser (d₁).

7. Servolenkung nach einem der vorhergehenden Ansprüche, **dadurch gekennzeichnet, dass** die Eingangswelle (12) eine Wellenschulter (38) aufweist, an der sich ein Durchmesser der Eingangswelle (12) von einem ersten Wellendurchmesser (d₁), der dem Außendurchmesser (d₁) des Wellenaufweitungselements (32) entspricht, auf einen gegenüber dem ersten Wellendurchmesser (d₁) kleineren, zweiten Wellendurchmesser (d₂) ändert, wobei der Sensor (40) im Bereich des ersten Wellendurchmessers (d₁) an der Eingangswelle (12) befestigt ist und axial an die Wellenschulter (38) angrenzt.

8. Servolenkung nach Anspruch 7, **dadurch gekennzeichnet, dass** der Öffnungsdurchmesser (d_{O}) um wenigstens 1 mm kleiner ist als ein Sensor-Außendurchmesser (d_{S}).

9. Servolenkung für Fahrzeuge, mit
einer Eingangswelle (12), die um eine Lenkachse (A) drehbar ist,
einem um die Eingangswelle (12) angeordneten Mantelrohr (14),
einem Sensorgehäuse (16), welches axial an das Mantelrohr (14) angrenzt und eine Gehäuseöffnung (18) für die Eingangswelle (12) aufweist, sowie
einem Wellenaufweitungselement (32), das mit der Eingangswelle (12) verbunden ist und einen Außendurchmesser (d₁) aufweist,
wobei sich die Eingangswelle (12) durch das Mantelrohr (14) und die Gehäuseöffnung (18) ins Innere des Sensorgehäuses (16) erstreckt,
wobei ein Öffnungsdurchmesser (d_{O}) der Gehäuseöffnung (18) kleiner ist als der Außendurchmesser (d₁) des Wellenaufweitungselements (32),
**dadurch gekennzeichnet, dass** das Wellenaufweitungselement (32) durch einen separaten Sicherungsring gebildet ist, der in einer Nut der Eingangswelle (12) axial unverschieblich aufgenommen ist, wobei der Sicherungsring radial über den Außenumfang der Eingangswelle (12) hinausragt und eine Kontaktfläche aufweist, die bei einer Bewegung der Eingangswelle (12) in einer axialen Richtung am Rand der Gehäuseöffnung (18) anschlägt.

10. Servolenkung nach Anspruch 9, **dadurch gekennzeichnet, dass** der Sicherungsring im Inneren des Sensorgehäuses (16) angeordnet ist.

## Claims

1. A power steering for a vehicle, comprising
an input shaft (12) which is rotatable about a steering axis (A),
a steering column tube (14) arranged around the input shaft (12),
a sensor housing (16) which is axially adjacent to the steering column tube (14) and has a housing opening (18) for the input shaft (12), and
a shaft expansion element (32) which is connected with the input shaft (12) and has an outside diameter (d₁),
the input shaft (12) extending through the steering column tube (14) and the housing opening (18) into the interior of the sensor housing (16),
an opening diameter (d_{O}) of the housing opening (18) being smaller than the outside diameter (d₁) of the shaft expansion element (32),
**characterized in that** the shaft expansion element (32) is formed by a sensor (40) which encloses the input shaft (12), is fastened to the input shaft (12), and has a contact surface (34, 42) which, upon a movement of the input shaft (12) in an axial direction, strikes against the edge of the housing opening (18).

2. The power steering according to claim 1, **characterized in that** the steering column tube (14) has an axial tube end (31) which is firmly connected with the sensor housing (16).

3. The power steering according to either of the preceding claims, **characterized in that** the contact surface (34) is formed by a shaft shoulder (38) at which a diameter of the input shaft (12) changes from a first shaft diameter (d₁), which corresponds to the outside diameter (d₁) of the shaft expansion element (32), to a second shaft diameter (d₂), which is smaller as compared with the first shaft diameter (d₁).

4. The power steering according to claim 3, **characterized in that** the shaft shoulder (38) is arranged in the interior of the sensor housing (16), the input shaft (12) having the first shaft diameter (d₁) in the sensor housing (16) and the second shaft diameter (d₂) in the steering column tube (14).

5. The power steering according to claim 3 or 4, **characterized in that** the housing opening (18) is a circular opening, wherein the following holds for the opening diameter (d_{O}): d₁ > d_{O} > d₂.

6. The power steering according to any of claims 3 to 5, **characterized in that** the opening diameter (d_{O}) is at least 1 mm smaller than the first shaft diameter (d₁).

7. The power steering according to any of the preceding claims, **characterized in that** the input shaft (12) has a shaft shoulder (38) at which a diameter of the input shaft (12) changes from a first shaft diameter (d₁), which corresponds to the outside diameter (d₁) of the shaft expansion element (32), to a second shaft diameter (d₂), which is smaller as compared with the first shaft diameter (d₁), the sensor (40) being fastened to the input shaft (12) in the region of the first shaft diameter (d₁) and being axially adjacent to the shaft shoulder (38).

8. The power steering according to claim 7, **characterized in that** the opening diameter (d_{O}) is at least 1 mm smaller than a sensor outside diameter (d_{S}).

9. A power steering for a vehicle, comprising
an input shaft (12) which is rotatable about a steering axis (A),
a steering column tube (14) arranged around the input shaft (12),
a sensor housing (16) which is axially adjacent to the steering column tube (14) and has a housing opening (18) for the input shaft (12), and
a shaft expansion element (32) which is connected with the input shaft (12) and has an outside diameter (d₁),
the input shaft (12) extending through the steering column tube (14) and the housing opening (18) into the interior of the sensor housing (16),
an opening diameter (d_{O}) of the housing opening (18) being smaller than the outside diameter (d₁) of the shaft expansion element (32),
**characterized in that** the shaft expansion element (32) is formed by a separate retaining ring which is received in a groove of the input shaft (12) so as to be axially non-displaceable, the retaining ring protruding radially beyond the outer circumference of the input shaft (12) and having a contact surface which, upon a movement of the input shaft (12) in an axial direction, strikes against the edge of the housing opening (18).

10. The power steering according to claim 9, **characterized in that** the retaining ring is arranged in the interior of the sensor housing (16).

## Revendications

1. Direction assistée pour véhicules, comportant :
un arbre d'entrée (12) mobile en rotation autour d'un essieu directeur (A),
un tube enveloppe (14) agencé autour de l'arbre d'entrée (12),
un boîtier de capteur (16) qui est axialement adjacent au tube enveloppe (14) et qui présente un orifice de boîtier (18) pour l'arbre d'entrée (12), et
un élément d'élargissement d'arbre (32) qui est relié à l'arbre d'entrée (12) et qui présente un diamètre extérieur (d₁),
l'arbre d'entrée (12) s'étendant à travers le tube enveloppe (14) et l'orifice de boîtier (18) vers l'intérieur du boîtier de capteur (16),
un diamètre d'orifice (d_{O}) de l'orifice de boîtier (18) étant inférieur au diamètre extérieur (d₁) de l'élément d'élargissement d'arbre (32),
**caractérisée en ce que** l'élément d'élargissement d'arbre (32) est formé par un capteur (40) qui entoure l'arbre d'entrée (12), qui est fixé sur l'arbre d'entrée (12) et qui présente une face de contact (34, 42) qui bute contre le bord de l'orifice de boîtier (18) lors d'un déplacement de l'arbre d'entrée (12) dans un sens axial.

2. Direction assistée selon la revendication 1, **caractérisée en ce que** le tube enveloppe (14) présente une extrémité de tube axiale (31) qui est reliée de manière solidaire au boîtier de capteur (16).

3. Direction assistée selon l'une des revendications précédentes, **caractérisée en ce que** la face de contact (34) est formée par un épaulement d'arbre (38) au niveau duquel un diamètre de l'arbre d'entrée (12) change d'un premier diamètre d'arbre (d₁) correspondant au diamètre extérieur (d₁) de l'élément d'élargissement d'arbre (32), en un deuxième diamètre d'arbre (d₂) inférieur par rapport au premier diamètre d'arbre (d₁).

4. Direction assistée selon la revendication 3, **caractérisée en ce que** l'épaulement d'arbre (38) est agencé à l'intérieur du boîtier de capteur (16), l'arbre d'entrée (12) présentant dans le boîtier de capteur (16) le premier diamètre d'arbre (d₁) et dans le tube enveloppe (14) le deuxième diamètre d'arbre (d₂).

5. Direction assistée selon la revendication 3 ou 4, **caractérisée en ce que** l'orifice de boîtier (18) est un orifice circulaire, d₁ > d_{O} > d₂ étant valable pour le diamètre d'orifice (d_{O}).

6. Direction assistée selon l'une des revendications 3 à 5, **caractérisée en ce que** le diamètre d'orifice (d_{O}) est inférieur d'au moins 1 mm au premier diamètre d'arbre (d₁).

7. Direction assistée selon l'une des revendications précédentes, **caractérisée en ce que** l'arbre d'entrée (12) présente un épaulement d'arbre (38) au niveau duquel un diamètre de l'arbre d'entrée (12) change d'un premier diamètre d'arbre (d₁) correspondant au diamètre extérieur (d₁) de l'élément d'élargissement d'arbre (32), en un deuxième diamètre d'arbre (d₂) inférieur par rapport au premier diamètre d'arbre (d₁), le capteur (40) étant fixé à l'arbre d'entrée (12) dans la zone du premier diamètre d'arbre (d₁) et étant axialement adjacent à l'épaulement d'arbre (38).

8. Direction assistée selon la revendication 7, **caractérisée en ce que** le diamètre d'orifice (d_{O}) est inférieur d'au moins 1 mm au diamètre extérieur de capteur (d_{S}).

9. Direction assistée pour véhicules, comportant
un arbre d'entrée (12) mobile en rotation autour d'un essieu directeur (A),
un tube enveloppe (14) agencé autour de l'arbre d'entrée (12),
un boîtier de capteur (16) qui est axialement adjacent au tube enveloppe (14) et qui présente un orifice de boîtier (18) pour l'arbre d'entrée (12), et
un élément d'élargissement d'arbre (32) qui est relié à l'arbre d'entrée (12) et qui présente un diamètre extérieur (d₁),
l'arbre d'entrée (12) s'étendant à travers le tube enveloppe (14) et l'orifice de boîtier (18) vers l'intérieur du boîtier de capteur (16),
un diamètre d'orifice (d_{O}) de l'orifice de boîtier (18) étant inférieur au diamètre extérieur (d₁) de l'élément d'élargissement d'arbre (32),
**caractérisée en ce que** l'élément d'élargissement d'arbre (32) est formé par une bague de retenue séparée qui est reçue de manière axialement non-déplaçable dans une rainure de l'arbre d'entrée (12), la bague de retenue faisant radialement saillie au-delà de la périphérie extérieure de l'arbre d'entrée (12) et présentant une face de contact qui bute contre le bord de l'orifice de boîtier (18) lors d'un déplacement de l'arbre d'entrée (12) dans un sens axial.

10. Direction assistée selon la revendication 9, **caractérisée en ce que** la bague de retenue est agencée à l'intérieur du boîtier de capteur (16).
